Europäisches Patentamt

European Patent Office

Office européen des brevets

(19)

(11) Veröffentlichungsnummer : **0 031 569**
**B1**

(12) **EUROPÄISCHE PATENTSCHRIFT**

(45) Veröffentlichungstag der Patentschrift :
**13.06.84**

(21) Anmeldenummer : **80108090.4**

(22) Anmeldetag : **20.12.80**

(51) Int. Cl.³ : **H 01 B 13/14**

(54) **Herstellung von isolierten direkt verzinnbaren Wickeldrähten.**

(30) Priorität : **27.12.79 AT 8166/79**

(43) Veröffentlichungstag der Anmeldung :
**08.07.81 Patentblatt 81/27**

(45) Bekanntmachung des Hinweises auf die Patenterteilung : **13.06.84 Patentblatt 84/24**

(84) Benannte Vertragsstaaten :
**AT BE CH DE FR GB IT LI NL SE**

(56) Entgegenhaltungen :
**US-A- 2 360 097**
**DEUTSCHE ELEKTROTECHNISCHE KOMMISSION im**
**DIN und VDE (DKE): Deutsche Norm DIN 46 435**
**(Wickeldrähte), BEUTH VERLAG GMBH, Berlin und**
**Köln, April 1977**
**Die Akte enthält technische Angaben, die nach dem**
**Eingang der Anmeldung eingereicht wurden und die**
**nicht in dieser Patentschrift enthalten sind.**

(73) Patentinhaber : **Dr. Beck & Co. AG**
**Grossmannstrasse 105**
**D-2000 Hamburg 28 (DE)**

(72) Erfinder : **Janssen, Harald, Dr.**
**Birkenkamp 1**
**D-2057 Reinbek (DE)**
Erfinder : **Kertscher, Eberhard**
**Clé des champs 4**
**CH-1032 Romanel (CH)**

(74) Vertreter : **Rutkowski, Rudi, Dr.**
**c/o BASF Farben + Fasern AG Patentabteilung**
**D-4400 Münster (DE)**

Jouve, 18, rue St-Denis, 75001 Paris, France

**Beschreibung**

Die Erfindung betrifft ein Verfahren zum Herstellen von isolierten direkt verzinnbaren Wickeldrähten für die Elektroindustrie durch Extrusion von thermoplastischen Polykondensatharzen ohne Nachbehandlung der extrudierten Beschichtung durch Nachstrecken.

Direkt verzinnbare Wickeldrähte kommen in erster Linie in der Rundfunk- und Fernsehtechnik sowie in der Computerindustrie zum Einsatz. Hierbei wird die Lackisolation beim Eintauchen in ein heißes Lötbad selbsttätig entfernt und gleichzeitig der Draht mit Lötzinn überzogen.

Dieses Verhalten ermöglicht ein Verzinnen von Lackdrahtanschlußenden ohne das sonst notwendige mechanische Abisolieren, was bei den verwendeten Fein- und Feinstdrähten technisch auch kaum möglich wäre. Bei den beim Verzinnungsprozeß üblichen Temperaturen von ca. 370 °C zieht das Zinn direkt auf den Kupferdraht auf. Für die oben genannte Industrie, in der an jedem Gerät eine Vielzahl von Lötstellen bearbeitet werden muß, kann die durch diese Eigenschaften bewirkte Rationalisierungsmöglichkeit nicht hoch genug eingeschätzt werden.

Das zur Diskussion stehende Einsatzgebiet wird seit langem von den Polyurethanlackdrähten beherrscht. Urethangruppen werden nämlich bei den genannten hohen Temperaturen im Zinnbad reproduzierbar aufgespalten, wobei niedermolekulare Spaltprodukte entstehen, die gleichzeitig als Flußmittel für das Lötzinn wirken.

In der Praxis kommen ausschließlich Kombinationen aus verzweigten hydroxylgruppenhaltigen Polyestern und blockierten zwei- oder mehrwertigen Isocyanaten zum Einsatz. Als Blockierungsmittel wird im allgemeinen Phenol oder Kresol verwendet. Die Mischung aus Polyestern und blockierten Isocyanaten wird vorwiegend in kresolischen Lösungsmitteln gelöst. Bei der Verarbeitung dieser Lacke auf bekannten Drahtbeschichtungsanlagen werden die Lösungsmittel im Einbrennofen verdampft und die Blockierungsmittel abgespalten, so daß die nunmehr frei werdenden Isocyanate mit den überschüssigen Hydroxylgruppen der Polyester unter Bildung von Urethangruppen reagieren können. Die entweichenden phenolischen und kresolischen Lösungs- bzw. Blockierungsmittel führen zu einer starken Umweltbelastung und müssen daher mit aufwendigen Methoden, z. B. durch katalytische oder thermische Nachverbrennung, vernichtet werden. Außerdem ist das Hantieren mit diesen gefährlichen Arbeitsstoffen problematisch.

Die US-A-2 360 097 beschreibt ein Extruderverfahren, bei dem der Kunststoff in Form eines Schlauches um den Draht herumgedrückt wird. Der Draht hat dabei eine höhere Geschwindigkeit als die austretende Kunststoffhülle, wodurch der Kunststoffüberzug auf dem Draht verstreckt und fixiert wird.

Aus der DE-B-26 38 763 ist ein Verfahren bekannt, isolierte Wickeldrähte durch Extrusion von teilkristallinen thermoplastischen Polykondensaten herzustellen, wobei keine Nachbehandlung — etwa ein Nachstrecken oder eine Härtungsreaktion — erforderlich ist. Die nach dem bekannten Verfahren erhaltenen isolierten Drähte lassen sich jedoch nicht in ausreichend kurzer Zeit im Lötbad unter den genannten Bedingungen verzinnen.

Die Anmelderin hatte sich die Aufgabe gestellt, unter Vermeidung der bisherigen Nachteile ein umweltfreundliches Verfahren zur Herstellung von direkt verzinnbaren Wickeldrähten zu schaffen.

Diese Aufgabe wurde gelöst durch ein Verfahren zum Herstellen von isolierten direkt verzinnbaren Wickeldrähten durch Extrusion von thermoplastischen Polykondensatharzen ohne Nachbehandlung der extrudierten Beschichtung durch Nachstrecken, wobei die Harze in einer Schichtstärke, die den Erfordernissen des Normblattes DIN 46435 genügt, in einem Arbeitsgang auf den Draht aufgebracht werden, das dadurch gekennzeichnet ist, daß lösungsmittelfreie Polyurethanelastomere aus difunktionellen aromatischen Isocyanaten und monomeren Diolen verwendet werden.

Lösungsmittelfreie, thermoplastische Polyurethanelastomere sind handelsüblich. Sie werden hergestellt unter Verwendung von difunktionellen aromatischen Isocyanaten und monomeren Diolen als Kettenverlängerer, wie z. B. Butandiol-1,4 und Hexandiol-1,6.

Da diese Polyurethanelastomeren keinerlei Lösungsmittel bzw. phenolische Blocksubstanzen enthalten, entfallen aufwendige Einrichtungen zum Vernichten der bisher verwendeten gesundheitsschädlichen Lösungsmittel respektive der abgespaltenen Blockierungsmittel. Das erfindungsgemäße Verfahren ist daher für den Verarbeiter umweltfreundlicher und zeichnet sich zudem durch hohe Wirtschaftlichkeit aus.

Für die Extrusion von lösungsmittelfreien thermoplastischen Polyurethanelastomeren ist ein Extruder, wie er beispielsweise in der DE-AS 27 28 883 beschrieben ist, geeignet. Es war überraschend und nicht vorhersehbar, daß die Polyurethane die hohen Temperaturen und den hohen Druck im Extruder aushalten, ohne sich bereits teilweise in die Spaltprodukte zu zersetzen, wie dies beim Verzinnen der Fall ist.

Die Verzinnbarkeit der mit thermoplastischen Polyurethanelastomeren beschichteten Wickeldrähte ist, wie aus den nachfolgenden Beispielen ersichtlich, überraschend niedrig.

Für alle Beispiele wurde ein weichgeglühter Kupferrunddraht von 0,60 mm Durchmesser eingesetzt. Die angegebenen Extrudertemperaturen beziehen sich jeweils auf die Strecke vom Einlauf bis zur Düse. Die letzten drei Temperaturangaben gelten für das Düsensystem.

## Beispiel 1

Beschichtungsmaterial : Polyurethan-Elastomeres mit einer Dichte von 1,19 g/cm$^3$ (nach DIN 53479) und einer Shore-Härte A von 87 (nach DIN 53505)

Verarbeitungsbedingungen :
Extrusionstemperatur : 160/180/220/210/225/245 °C
Abzugsgeschwindigkeit : 200 m/min
Schichtstärke (Durchmesserzunahme) : 54 μm

Eigenschaften der Wickeldrähte :
Bleistifthärte : B
Wickellocke nach 25 % Vordehnung über den einfachen Durchmesser des Drahtes (0,6 mm) : ohne Risse.
Verzinnbarkeit (nach DIN 46416, Abs. 17) bei 375 °C : 1,1 s

## Beispiel 2

Beschichtungsmaterial : Polyurethan-Elastomeres mit einer Dichte von 1,22 g/cm$^3$ (nach DIN 54479) und einer Shore-Härte A von 94 (nach DIN 53505)

Verarbeitungsbedingungen :
Extrusionstemperatur : 160/180/210/205/215/230 °C
Abzugsgeschwindigkeit : 200 m/min
Schichtstärke (Durchmesserzunahme) : 50 μm

Eigenschaften der Wickeldrähte :
Bleistifthärte : B
Wickellocke nach 25 % Vordehnung über den einfachen Durchmesser des Drahtes (0,6 mm) : ohne Risse
Verzinnbarkeit (nach DIN 46416, Abs. 17) bei 375 °C : 1,2 s

## Beispiel 3

Beschichtungsmaterial : Polyurethan-Elastomeres mit einer Dichte von 1,24 g/cm$^3$ (nach DIN 54479) und einer Shore-Härte D von 64 (nach DIN 53505)

Verarbeitungsbedingungen :
Extrusionstemperatur : 160/170/190/195/220/250 °C
Abzugsgeschwindigkeit : 200 m/min
Schichtstärke (Durchmesserzunahme) : 61 μm

Eigenschaften der Wickeldrähte :
Bleistifthärte : B
Wickellocke nach 25 % Vordehnung über den einfachen Durchmesser des Drahtes (0,6 mm) : ohne Risse
Verzinnbarkeit (nach DIN 46416, Abs. 17) bei 375 °C : 1,2 s

**Anspruch**

Verfahren zum Herstellen von isolierten direkt verzinnbaren Wickeldrähten durch Extrusion von thermoplastischen Polykondensatharzen ohne Nachbehandlung der extrudierten Beschichtung durch Nachstrecken, wobei die Harze in einer Schichtstärke, die den Erfordernissen des Normblattes DIN 46435 genügt, in einem Arbeitsgang auf dem Draht aufgebracht werden, dadurch gekennzeichnet, daß lösungsmittelfreie Polyurethanelastomere aus difunktionellen aromatischen Isocyanaten und monomeren Diolen verwendet werden.

**Claim**

Method for the production of insulated winding wires that can be directly tinned by extrusion of thermoplastic polycondensate resins without aftertreatment of the extruded coating by after-stretching, wherein the resins are applied on the wire in one step in such a layer thickness complying with the requirements of the German Industrial Standard DIN 46435, the improvement which comprises employing solvent-free polyurethane elastomers of difunctional aromatic isocyanates and monomeric diols.

**0 031 569**

**Revendication**

Procédé de fabrication de fils d'enroulement isolés pouvant être étamés directement, par extrusion de résines thermoplastiques de polycondensation sans post-traitement du revêtement extrudé par étirage après coup, les résines étant appliquées sur le fil en une seule opération avec une épaisseur de couche qui répond aux exigences de la norme DIN 46435, caractérisé par le fait que l'on utilise des élastomères de polyuréthane exempts de solvant, tirés d'isocyanates aromatiques bifonctionnels et de diols monomères.

4